Europäisches Patentamt

European Patent Office

Office européen des brevets

(11) Publication number: **0 098 574**
**B1**

(12) **EUROPEAN PATENT SPECIFICATION**

(45) Date of publication of patent specification: **07.01.88**

(21) Application number: **83106523.0**

(22) Date of filing: **04.07.83**

(51) Int. Cl.⁴: **H 04 N 1/06,** H 04 N 1/028, G 01 T 1/29

(54) Radiation image read-out method and apparatus.

(30) Priority: **06.07.82 JP 117382/82**

(43) Date of publication of application:
**18.01.84 Bulletin 84/03**

(45) Publication of the grant of the patent:
**07.01.88 Bulletin 88/01**

(84) Designated Contracting States:
**DE FR NL**

(56) References cited:
EP-A-0 098 596
DE-B-1 103 960
GB-A-2 086 689
US-A-3 581 257
US-A-4 054 884
US-A-4 258 264
US-A-4 315 318

(73) Proprietor: **FUJI PHOTO FILM CO., LTD.**
**210 Nakanuma Minamiashigara-shi**
**Kanagawa-ken, 250-01 (JP)**

(72) Inventor: **Yamamoto, Takaaki c/o Fuji Photo**
**Film Co., Ltd.**
**798 Miyanodai Kaisei-machi**
**Ashigarakami-gun Kanagawa-ken (JP)**
Inventor: **Takano, Masao c/o Fuji Photo Film**
**Co., Ltd.**
**798 Miyanodai Kaisei-machi**
**Ashigarakami-gun Kanagawa-ken (JP)**

(74) Representative: **Klunker, Hans-Friedrich, Dr.**
**et al**
**Patentanwälte Klunker . Schmitt-Nilson . Hirsch**
**Winzererstrasse 106**
**D-8000 München 40 (DE)**

# Description

This invention relates to a radiation image read-out method in a radiation image recording and read-out system using a stimulable phosphor sheet, and an apparatus for carrying out the method.

A radiation image recording and read-out system using a stimulable phosphor is disclosed, for example, in US-patent nos. US—A—4,258,264 and US—A—4,315,318, and Japanese Unexamined Patent Publication No. 56(1981)—11395. The method was also described at meetings of the radiation society, in "Nikkan Kogyo Shinbun" (Daily Industrial Newspaper), June 23, 1981 edition, page 16, and elsewhere, and attracted attention in various fields.

The aforesaid system provides various radiation images useful for viewing, particularly for diagnostic purposes, which could not be obtained by the conventional radiography using a silver halide photographic material. Moreover, the system can further provide improved diagnostic effects when combined with an up-to-date medical image recording technique such as computed tomography (CT) or introduction of radio-isotope into human bodies. Therefore, the system is very effective for viewing purposes, particularly for medical diagnosis.

The aforesaid system generally comprises the steps of (i) recording (recording and storing a radiation image in a stimulation phosphor), (ii) read-out (converting the stored image into an image signal, and sometimes storing the read-out image signal), and (iii) reproducing (converting the image signal into a visible image, i.e. displaying the visible image on a display device such as a cathode ray tube or permanently recording the visible image on a recording medium such as photographic film). The present invention is concerned with the read-out step in the aforesaid system.

The read-out of the radiation image stored in the stimulable phosphor is conducted by exposing the stimulable phosphor carrying radiation energy stored therein to stimulating rays which cause the stimulable phosphor to emit light in proportion to the radiation energy, and photoelectrically detecting the emitted light. Desirably, a sheet or a plate provided with a stimulable phosphor layer (hereinafter referred to as the recording material) is two-dimensionally scanned with a light beam such as a laser beam, and the light emitted from the recording material upon stimulation thereof is sequentially detected by use of a photodetector such as photomultiplier to obtain an image signal. In this case, the two-dimensional scanning is conducted by scanning the recording material provided with the stimulable phosphor layer with the light beam in the main scanning direction and the sub-scanning direction. For this purpose, the recording material is moved in one direction, and an optical scanning system for scanning the recording material at right angles to the moving direction of the recording material is used. Alternatively, the recording material is maintained stationary, and an optical scanning system for scanning the recording material both in the main scanning direction and in the sub-scanning direction is used. The former method using the optical scanning system for scanning only in one direction is employed in many cases since the optical scanning system is far more inexpensive than the optical scanning system for scanning in two directions. However, in the former method, it is an important requirement to move the recording material in one direction at a stable speed. Namely, when the recording material is moved at a predetermined speed in one direction for the sub-scanning and, at the same time, scanned with a light beam for the main scanning at right angles to the sub-scanning direction, unless the recording material is moved very accurately at a predetermined, constant speed, non-uniformity occurs in the read-out operation and makes it impossible to obtain a visible image having a uniform image density at the subsequent reproducing step. Therefore, a high accuracy is required in the sub-scanning, necessitating a holding means and a moving mechanism for the recording material, both of which must be of high-accuracy and, consequently, are of expensive construction.

As the mechanism for moving the recording material in the sub-scanning direction, various methods have heretofore been known. For example, a flexible sheet-like recording material is closely contacted with the peripheral surface of a drum by use of clamping devices or pinch rolls, and the drum is rotated to move the recording material. In another method, a suction box is installed at a part in the inside of a drum to make a sheet-like recording material adhere to a part of the peripheral surface of the drum corresponding to said part by suction force, and the drum is rotated to move the recording material in close contact with the drum. In addition, use of the suction box is disadvantageous from the practical viewpoint since the blower for generating the suction force generates noise and vibrations. Vibrations of the blower present a very real problem particularly in a read-out apparatus which is required to achieve feed of the recording material at a high accuracy and which incorporates a precise optical scanning system.

The problem underlying the present invention is to provide a radiation image read-out method in which a simplified mechanism is employed for fixing the phosphor sheet to the drum-like sheet-holding body.

In a radiation image read-out method comprising the steps of the pre-characterizing portion of claim 1 this problem is solved according to the present invention by said stimulable phosphor sheet being provided with a magnetic material layer on its other surface, said surface contacting at least a part of a surface of said drum by magnetic attraction, the drum being provided with a magnet layer thereon, or a magnet being mounted within the drum.

Claims 2 and 4 each define a radiation image read-out apparatus which solves the above mentioned problem.

An important feature of the claimed invention is the use of magnetic attraction as the means for closely contacting the stimulable phosphor sheet with the surface of the drum.

Holding sheets on a drum and fixing the sheets on the surface of the drum by means of magnetic attraction using additional metal strips is known from GB—A—2086689 in connection with a photographic transparency supporting device. A drum includes at least one window, the drum surface being covered with a magnetic rubber layer. A trimming mask and stripes made of magnetic material are used to clamp a photographic transparency over the window. However, clamping a sheet member using magnetic stripes or frames is often undesirable, since there is a relatively high risk of misalignment of the sheet due to slip between the sheet and the drum surface and between the sheet and the magnetic stripes. Moreover, fixing sheets on a drum surface using separate magnetic members is cumbersome.

In embodiments of the present invention, a flexible stimulable phosphor sheet provided with a stimulable phosphor layer on one surface and a magnetic material layer on the opposite surface is employed, and a magnet for magnetically attracting the magnetic material layer of the stimulable phosphor sheet is positioned on or within the peripheral surface of the drum. The stimulable phosphor sheet is adhered to the peripheral surface of the drum by magnetic attraction, and the drum is rotated to move the stimulable phosphor sheet. At the same time, the stimulable phosphor sheet is scanned with a light beam at right angles to the moving direction of the stimulable phosphor sheet.

In the present invention, since adhesion of the stimulable phosphor sheet to the peripheral surface of the drum is effected by magnetic attraction, it is unnecessary to use clamp devices or a suction box, the construction of the read out apparatus is simplified, and the problems with regard to noise and vibrations are solved. Further, since no mechanism projecting towards the surface of the stimulable phosphor sheet, such as a clamp device or pinch roll is needed, a scanning light source and a light condenser can be positioned near to the surface of the stimulable phosphor sheet as in the case of the conventional method using the suction box. Namely, the present invention has the advantage that noise and vibrations do not occur as they do in the case of the conventional method using clamping devices or pinch rolls, and also the advantage that the scanning and read-out system can be positioned near to the surface of the stimulable phosphor sheet as in the case of the conventional method using the suction box. The present invention is further advantageous in that the construction of the scanning and read-out system is simplified compared with the scanning and read-out system according to these conventional methods. Another advantage of the present invention is that read-out can be conducted economically.

The magnet employed in the present invention may be a permanent magnet or an electromagnet. An electromagnet is advantageous in that the stimulable phosphor sheet can be easily loaded on and unloaded from the drum. The magnet may extend over the entire peripheral surface of the drum, or may extend only partially on the peripheral surface of the drum so that the magnet can attract both the forward and rearward ends of the stimulable phosphor sheet. Alternatively, the magnet may be positioned at one position inside of a cylindrical drum, for example, over the range of about a quarter of the entire circumference of the drum.

By the rotation of the drum, the stimulable phosphor sheet is moved in the sub-scanning direction of the two-dimensional scanning. Namely, when the whole area of the stimulable phosphor sheet is closely contacted with and held on the peripheral surface of the drum, two-dimensional scanning can be conducted by rotating the drum at a high speed and moving a light beam on the stimulable phosphor sheet at a low speed in a direction parallel to the rotation axis of the drum. When the forward and rearward ends of the stimulable phosphor sheet are magnetically attracted to the peripheral surface of the drum and the middle portion of the stimulable phosphor sheet is closely contacted with the peripheral surface of the drum by the sheet tension, two-dimensional scanning should preferably be conducted by rotating the drum at a low speed for effecting the sub-scanning and moving a light beam on the stimulable phosphor sheet at a high speed in the axial direction of the drum by use of a main scanning optical system.

Brief Description of the Drawings

Figure 1 is a perspective view showing an embodiment of the apparatus for carrying out the radiation image read-out method in accordance with the present invention, and

Figure 2 is a perspective view showing another embodiment of the apparatus for carrying out the radiation image read-out method in accordance with the present invention.

Description of the Preferred Embodiments

The present invention will hereinbelow be described in further detail with reference to the accompanying drawings.

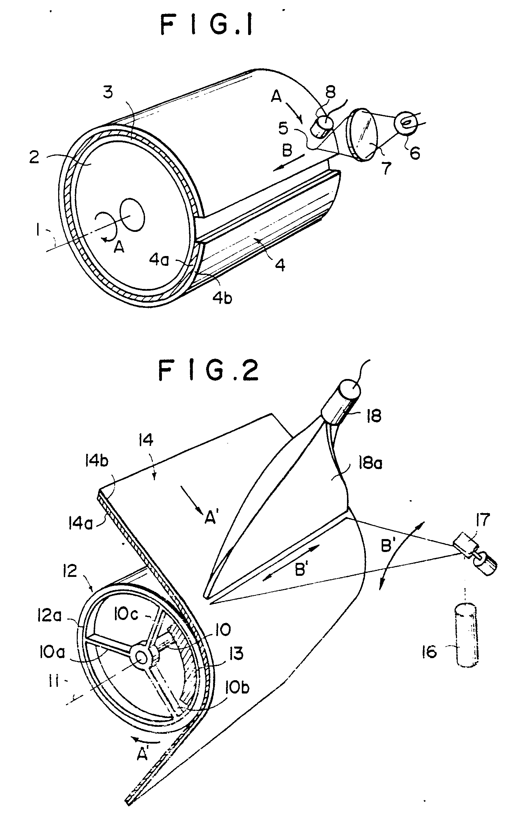

In Figure 1, a magnet layer 3 is laid over and attached to the peripheral surface of a drum 2 rotatably supported around a rotation axis 1, and a stimulable phosphor sheet 4 comprising a magnetic material layer 4a and a stimulable phosphor layer 4b is closely contacted with the magnet layer 3 by magnetic attraction. The drum 2 is rotated at a high speed in the direction of the arrow A around the rotation axis 1. At the same time, the stimulable phosphor sheet 4 is exposed to a light spot 5 emitted from light source 6 via a lens 7. The light source 6 and the lens 7 are moved in the direction of the arrow B parallel to the rotation axis 1 of the drum, thereby to two-dimensional scan the stimulable phosphor sheet 4 with the light beam. Namely, main scanning is effected in the rotating direction of the drum 2 indicated by the arrow A, and sub-scanning is effected in the rotation axis direction of the drum 2 indicated by the arrow B. Instead of moving the light source 6 and the lens 7, they may be maintained stationary and the drum 2 may be slid in the direction of the rotation axis 1 thereof in order to conduct the sub-scanning in the direction indicated by the arrow B.

The stimulable phosphor sheet 4 is provided with the magnetic material layer 4a and the stimulable phosphor layer 4b. In the stimulable phosphor layer 4b, an image of a radiation passing through an object is stored in advance. When the stimulable phosphor sheet 4 is exposed to the light spot 5, the exposed portion thereof emits light, and the emitted light is detected and converted into an image signal by a photodetector 8. The image signal is obtained in time sequence according to the two-dimensional scanning, and used for the image processing and reproducing.

Specifically, the stimulable phosphor sheet 4 has the magnetic material layer 4a coated on the rear surface of a substrate (not shown) and comprising a binder and magnetic particles dispersed in the binder, and the stimulable phosphor layer 4b coated on the front surface of the substrate. Alternatively, the substrate may be omitted, and the magnetic material layer 4a may serve as the substrate.

The magnet layer 3 is constituted by a ferromagnetic material layer laid over the peripheral surface of the cylindrical drum 2, and may be either a permanent magnet or an electromagnet wherein soft iron is magnetized by use of a magnetic field when necessary. When an electromagnet is employed as the magnet 3, a coil may be installed within the drum 2, and the magnet 3 may be magnetized by exciting the coil. The electromagnet is advantageous in that the stimulable phosphor sheet 4 can be handled easily when loading it on the drum 2 or unloading it from the drum 2 and, therefore, the loading and unloading operations are facilitated.

When the drum 2 having the construction as described above is used, the stimulable phosphor sheet 4 is closely contacted with the surface of the magnet layer 3 formed on the peripheral surface of the drum 2 by magnetic attraction, and it is unnecessary to use a special means for clamping the stimulable phosphor sheet 4 or fixing it by suction force generated by a blower or the like. Therefore, the photodetector 8 can be positioned near to the surface of the stimulable phosphor sheet 4, and read-out can be conducted in the absence of noise or vibrations due to a blower or the like. Further, the speed in the main scanning direction indicated by the arrow A can be stabilized by rotating the drum 2 at a high speed, and the sub-scanning can be conducted simply by moving the light source 6 and the lens 7 at a low speed with respect to the drum 2. Accordingly, the scanning system may have a simple construction and can be manufactured at a low cost.

Even when the stimulable phosphor sheet 4 has a somewhat high rigidity or involves curling, it can be closely contacted with the surface of the magnet 3 formed around the drum 2 by increasing the magnetic attraction.

Further, in the embodiment of Figure 1, the manner of operation need not be changed even when the size of the stimulable phosphor sheet 4 is changed. Accordingly, the apparatus is very easy to handle compared with a conventional apparatus using a clamping means wherein the positions of the clamps must be changed according to the size of the stimulable phosphor sheet.

Figure 2 shows another embodiment of the apparatus for carrying out the radiation image read-out method in accordance with the present invention. In Figure 2, a hollow drum 12 rotatable around a rotation axis 11 is employed, and a magnet 13 is positioned, for example, within a peripheral surface 12a of the drum 12 over the range of about a quarter of the entire circumference of the drum 12. The magnet 13 may be either a permanent magnet or an electromagnet as in the embodiment shown in Figure 1. However, the magnet 13 is fixed in a predetermined position, and the drum 12 is rotated with the inner surface thereof sliding on the outer surface of the magnet 13 or slightly spaced apart from the outer surface of the magnet 13. The magnet 13 is secured to a fixed shaft 10 extending along the rotation axis 11 of the drum 12. The peripheral surface 12a of the drum 12 is made of a material permeable to magnetic current, and the end portion of the peripheral surface 12a is rotatably supported on the end portion of the shaft 10 by a supporting member having spokes 10a, 10b and 10c.

When a stimulable phosphor sheet 14 provided with a magnetic material layer 14a on the rear side and a stimulable phosphor layer 14b on the front side is fed onto the peripheral surface 12a of the drum 12, the stimulable phosphor sheet 14 is magnetically attracted to and closely contacted with the portion of the peripheral surface 12a of the drum 12 within which the magnet 13 is positioned. As the drum 12 is rotated, the stimulable phosphor sheet 14 is moved in the sub-scanning direction indicated by the arrow A'. At the same time, the stimulable phosphor sheet 14 is exposed to a laser beam emitted from a laser beam source 16 and deflected in the main scanning direction B' by a scanning mirror 17. In this manner, the stimulable phosphor sheet 14 is scanned with the laser beam in two directions. When exposed to the laser beam, the stimulable phosphor sheet 14 emits light upon stimulation thereof, and the emitted light is condensed in a photodetector 18, such as photomultiplier, via a light guiding sheet 18a for condensing the light, thereby to obtain an image signal in time sequence. The light guiding sheet 18a is a total reflection type light guiding sheet having, at one

end, a light input face extending in the main scanning direction B′ near to the surface of the stimulable phosphor sheet 14 and, at the other end, a light output face opposed to a light receiving face of the photoconductor 18. The light guiding sheet 18a is made, for example, of shaped acrylic resin or the like.

In the embodiment of Figure 2, since the magnet 13 is installed only at a part of the peripheral surface 12a of the drum 12, only a part of the stimulable phosphor sheet 14 fed onto the drum 12 is magnetically attracted and closely contacted with said part of the peripheral surface 12a, and the other portion of the stimulable phosphor sheet 14 is naturally separated from the peripheral surface 12a because of the absence of the action of magnetic attraction. Therefore, the stimulable phosphor sheet 14 can be easily unloaded from the drum 12.

Also in the embodiment of Figure 2, since the stimulable phosphor sheet 14 is closely contacted with the drum 12, the stimulable phosphor sheet 14 is moved at a stable speed in the direction A′ as the drum 12 is rotated, and the sub-scanning can thereby be conducted. Further, since no clamp is used, the light guiding sheet 18a can be positioned near to the surface of the stimulable phosphor sheet 14, and special operations are not necessary even when the size of the stimulable phosphor sheet 14 is changed. In addition, since a suction means such as blower is not used, problems with regard to noise and vibrations do not occur.

**Claims**

1. A radiation image read-out method comprising the steps of:

i) closely contacting at least a part of a stimulable phosphor sheet (4, 14) which is provided with a stimulable phosphor layer (4b, 14b) carrying a radiation image stored therein with a sheet-holding body in the form of a drum (2, 12);

ii) rotating said holding body (2, 12) to move said stimulable phosphor sheet in one direction;

iii) scanning one surface of the stimulable phosphor sheet (4, 14) with a light beam at right angles to said movement direction of the stimulable phosphor sheet (4, 14) by use of a light beam scanning system (6, 7; 16, 17) thereby two-dimensionally scanning the surface of said stimulable phosphor sheet (4, 14);

iv) causing said stimulable phosphor sheet (4, 14) to release the radiation energy stored therein as light emission by said scanning with the light beam, and

v) photoelectrically detecting the emitted light to obtain an image signal,

characterized in that said stimulable phosphor sheet (4, 14) is provided with a magnetic material layer (4a, 14a) on its other surface, said surface contacting at least a part of a surface of said drum (2, 12) by magnetic attraction, the drum (2, 12) being provided with a magnet layer (3) thereon, or a magnet (13) being mounted within the drum (12).

2. A radiation image read-out apparatus comprising:

i) a sheet holding body in the form of a drum (2) supporting a stimulable phosphor sheet (4), which is provided with a stimulable phosphor layer (4b) carrying a radiation image stored therein;

ii) an optical scanning system (6, 7) for causing stimulating rays to scan one surface of said stimulable phosphor sheet (4), while at least part of the other surface of said sheet is in close contact with said holding body (2), from above and in a direction parallel to the rotation axis (1) of the drum (2);

iii) a drive means for rotating the holding body about said rotation axis (1), and

iv) a photoelectric converter (8) for receiving the light emitted from said stimulable phosphor sheet (4) exposed to said stimulating rays and photoelectrically converting the emitted light into an electrical signal,

characterized in that a magnet layer (3) is provided on the surface of the drum (2), for holding the phosphor sheet (4), which is provided with a magnetic material layer (4a) on its other surface, on said drum (2) by closely contacting said stimulable phosphor sheet (4) with said drum (2) by magnetic attraction acting between said magnet layer (3) and said magnetic material layer (4a) of said stimulable phosphor sheet (4).

3. An apparatus as defined in claim 2, wherein said optical scanning system (6, 7) serves as a main scanning means, and said drive means serves as a sub-scanning means.

4. A radiation image read-out apparatus comprising:

i) a sheet holding body in the form of a drum (12) rotatably supported,

ii) a means for feeding a stimulable phosphor sheet (14), which is provided with a stimulable phosphor layer (14b) carrying a radiation image stored therein into contact with the drum (12),

iii) a main scanning optical system (16, 17) for causing stimulating rays to scan one surface of said stimulable phosphor sheet (14) in a direction parallel to the rotation axis (11) of the drum (12);

iv) a sub-scanning means for rotating said drum (12) about said rotation axis (11), and

v) a photoelectric converter (18) for receiving the light emitted from said stimulable phosphor sheet (14) exposed to said stimulating rays and photoelectrically converting the emitted light into an electrical signal,

characterized in that a magnet (13) is mounted within the drum (12) along a part of the peripheral surface of drum (12), in that a magnetic material layer (14a) is provided on the other surface of said phosphor sheet (14), and in that the phosphor sheet (14) during scanning is closely contacted with a part of the surface of said drum (12) by magnetic attraction acting between said magnet (13) and said magnetic material layer (14a) of said stimulable phosphor sheet (14).

5. An apparatus as defined in claim 4 wherein said photoelectric converter is provided with a total reflection type light guiding sheet (18a) having, at one end, a light input face extending in the main scanning direction near to the surface of said stimulable phosphor sheet (14) and, at the other end, a light output face adjacent to a light receiving face of said photoelectric converter (18).

## Patentansprüche

1. Verfahren zum Auslesen eines Strahlungsbildes umfassend die Schritte:

i) zumindest ein Teil eines anregbaren Leuchtstoffblatts (4, 14), das mit einer anregbaren Leuchtstoffschicht (4b, 14b), die ein in ihr gespeichertes Strahlungsbild trägt, ausgestattet ist, wird in enge Berührung mit einem in Form einer Trommel ausgebildeten Blatt-Haltekörper (2, 12) gebracht;

ii) der Haltekörper (2, 12) wird gedreht, um das anregbare Leuchtstoffblatt in eine Richtung zu bewegen;

iii) eine Oberfläche des anregbaren Leuchtstoffblatts (4, 14) wird unter rechten Winkeln bezüglich der Bewegungsrichtung des anregbaren Leuchtstoffblattes (4, 14) mit einem Lichtstrahl unter Verwendung eines Lichtstrahl-Abtastsystems (6, 7; 16, 17) abgetastet, um dadurch die Oberfläche des anregbaren Leuchtstoffblatts (4, 14) zweidimensional abzutasten;

iv) das anregbare Leuchtstoffblatt (4, 14) wird durch das Abtasten mit dem Lichtstrahl veranlaßt, die in ihm gespeicherte Strahlungsenergie als Lichtemission abzugeben, und

v) das emittierte Licht wird fotoelektrisch erfaßt, um ein Bildsignal zu erhalten,

dadurch gekennzeichnet, daß das anregbare Leuchtstoffblatt (4, 14) auf seiner anderen Oberfläche mit einer Schicht aus magnetischem Material (4a, 14a) versehen ist, daß diese Oberfläche zumindest mit einem Teil einer Fläche der Trommel (2, 12) durch magnetische Anziehung in Berührung kommt, und daß die Trommel (2, 12) mit einer auf ihr befindlichen Magnetschicht (3), oder einem im Inneren der Trommel (12) monotierten Magneten (13) versehen ist.

2. Vorrichtung zum Auslesen eines Strahlungsbildes, umfassend:

i) einen in Form einer Trommel ausgebildeten Blatthaltekörper (2) der ein anregbares Leuchtstoffblatt (4) abstützt, welches mit einer anregbaren Leuchtstoffschicht (4b) ausgestattet ist, die ein in sich gespeichertes Strahlungsbild trägt;

ii) ein optisches Abtastsystem (6, 7), welches veranlaßt, daß Anregungsstrahlen von oben und in einer zur Drehachse (1) der Trommel parallelen Richtung eine Oberfläche des anregbaren Leuchtstoffblatts (4) abtasten, während zumindest ein Teil der anderen Oberfläche des Blatts in enger Berührung mit dem Haltekörper (2) steht;

iii) eine Antriebseinrichtung zum Drehen des Haltekörpers um die Drehachse (1), und

iv) einen fotoelektrischen Wandler (8) zum Empfangen des von dem den Anregungsstrahlen ausgesetzten anregbaren Leuchtstoffblatts (4) emittierten Lichts und zum fotoelektrischen Umwandeln des emittierten Lichts in ein elektrisches Signal,

dadurch gekennzeichnet, daß auf der Oberfläche der Trommel (2) eine Magnetschicht (3) vorgesehen ist, um das auf seiner anderen Oberfläche mit einer Schicht (4a) aus magnetischem Material versehene Leuchtstoffblatt (4) dadurch auf der Trommel (2) zu halten, daß das anregbare Leuchtstoffblatt (4) mit der Trommel (2) durch magnetische Anziehung, die zwischen der Magnetschicht (3) und der aus magnetischem Material bestehenden Schicht (4a) des anregbaren Leuchtstoffblatts (4) in enger Berührung gehalten wird.

3. Vorrichtung nach Anspruch 2, bei der das optische Abtastsystem (6, 7) als Haupt-Abtasteinrichtung und die Antriebseinrichtung als Unter-Abtasteinrichtung dient.

4. Vorrichtung zum Auslesen von Strahlungsbildern, umfassend:

i) einen in Form einer Trommel ausgebildeten Blatt-Haltekörper (12), der drehbar gelagert ist,

ii) eine Einrichtung, die in enger Berührung mit der Trommel (12) ein anregbares Leuchtstoffblatt (14) transportiert, welches mit einer anregbaren Leuchtstoffschicht (14b) ausgestattet ist, die ein in ihr gespeichertes Strahlungsbild trägt,

iii) ein optisches Haupt-Abtastsystem (16, 17), welches veranlaßt daß Anregungsstrahlen in einer Richtung parallel zur Drehachse (11) der Trommel (12) eine Oberlfäche des anregbaren Leuchtblatts (14) abtasten;

iv) eine Unter-Abtasteinrichtung zum Drehen der Trommel (12) um die Drehachse (11) und

v) einen fotoelektrischen Wandler (18), der das von dem den Anregungsstrahlen ausgesetzten anregbaren Leuchtstoffblatt (14) emittierte Licht empfängt und das emittierte Licht fotoelektrisch in ein elektrisches Signal umsetzt,

dadurch gekennzeichnet, daß im Inneren der Trommel (12) entlang eines Teils der Umfangsfläche der Trommel (12) ein Magnet (16) montiert ist, daß auf der anderen Seite des Leuchtstoffblatts (14) eine aus magnetischem Material bestehende Schicht (14a) vorgesehen ist, und daß das Leuchtstoffblatt (14) während der Abtastung durch magnetische Anziehung, die zwischen dem Magneten (13) und der aus magnetischem Material bestehenden Schicht (14a) des anregbaren Leuchtstoffblattes (14) wirkt, in enger Berührung mit einem Teil der Oberfläche der Trommel (12) gehalten wird.

5. Vorrichtung nach Anspruch 4, bei der der fotoelektrische Wandler mit einem totalreflektierenden Lichtleiterblatt (18a) ausgestattet ist, welches an einem Ende eine sich in Hauptabtastrichtung in der Nähe der Oberfläche des anregbaren Leuchtstoffblatts (14) erstreckende Lichteingangsseite und, am anderen Ende, eine einer-Lichtempfangsfläche des fotorelektrischen Wandlers (18) benachbarte Lichtausgangsseite aufweist.

## Revendications

1. Un procédé de lecture d'images de rayonnement, qui comporte les étapes consistant à:

i) à appliquer étroitement sur un corps porte-feuille en forme de tambour (2, 12) au moins une partie d'une feuille de substance luminescente excitable (4, 14) comportant une couche de substance luminescente excitable (4b, 14b) qui porte une image de rayonnement stockée dans ladite couche;

ii) à faire tourner ledit corps porte-feuille (2, 12) de manière à déplacer ladite feuille de substance luminescente excitable dans une première direction;

iii) à balayer (explorer) une face de ladite feuille de substance luminescente excitable (4, 14) à l'aide d'un faisceau lumineux perpendiculairement à la direction du déplacement de la feuille de substance luminescente excitable (4, 14) en utilisant un système de balayage (6, 7; 16, 17) à faisceau lumineux, de manière à effectuer un balayage bidimensionnel de la surface de ladite feuille de substance luminescente excitable (4, 14);

iv) à faire en sorte que ladite feuille de substance luminescente excitable (4, 14) libère l'énergie de rayonnement qu'elle a stockée, sous la forme d'une émission de lumière par l'effet du balayage précité à l'aide du faisceau lumineux; et

v) à détecter par des moyens photo-électriques la lumière émise afin de produire un signal d'image,

caractérisé en ce que ladite feuille de substance luminescente excitable (4, 14) est pourvue d'une couche de matière magnétique (4a, 14a) sur sa face opposée qui est mise en contact avec une partie au moins de la surface dudit tambour (2, 12) par l'effet d'une attraction magnétique, ledit tambour (2, 12) étant muni d'une couche magnétique (3) déposée sur ce tambour, ou d'un aimant (13) disposé à l'intérieur dudit tambour (12).

2. Un appareil de lecture d'images de rayonnement comprenant:

i) un corps porte-feuille en forme de tambour (2) qui supporte une feuille de substance luminescente excitable (4) comportant une couche de substance luminescente excitable (4b) chargée d'une image de rayonnement stockée dans cette couche;

ii) un système de balayage (d'exploration) optique (6, 7) destiné à provoquer le balayage d'une face de ladite feuille de substance luminescente excitable (4) par un rayonnement d'excitation pendant qu'au moins une partie de l'autre face de ladite feuille est en contact intime avec ledit corps porte-feuille (2), ce balayage étant effectué à partir du haut et dans une direction parallèle à l'axe de rotation (1) dudit tambour (2);

iii) des moyens d'entraînement pour entraîner en rotation ledit corps porte-feuille autour dudit axe de rotation (1); et

iv) un convertisseur photo-électrique (8) destiné à recevoir la lumière émise par ladite feuille de substance luminescente excitable (4) exposée audit rayonnement d'excitation et à convertir ladite lumière émise photoélectriquement en un signal électrique,

caractérisé en ce qu'une couche magnétique (3) est disposée sur la surface du tambour (2) pour maintenir sur ledit tambour (2) la feuille de substance luminescente (4) pourvue sur son autre face d'une couche de matière magnétique (4a), en mettant en contact intime ladite feuille de substance luminescente excitable (4) avec ledit tambour (2) par l'effet de l'attraction magnétique réciproque de ladite couche magnétique (3) et de ladite couche en matière magnétique (4a) de ladite feuille de substance luminescente excitable (4).

3. Un appareil selon la revendication 2, dans lequel ledit système de balayage optique (6, 7) sert de moyen de balayage principal, cependant que lesdits moyens d'entraînement servent de moyens de balayage secondaire.

4. Un appareil de lecture d'images de rayonnement, comprenant:

i) un corps porte-feuille en forme de tambour (12) monté à rotation;

ii) des moyens pour mettre en contact intime avec ledit tambour (12) une feuille de substance luminescente excitable (14) pourvue d'une couche de substance luminescente excitable (14b) portant une image de rayonnement qu'elle a stockée;

iii) un système de balayage optique principal (16, 17) qui assure le balayage d'une face de ladite feuille de substance luminescente excitable (14) par un rayonnement d'excitation, dans une direction parallèle à l'axe de rotation (11) dudit tambour (12);

iv) des moyens de balayage secondaire entraînant ledit tambour (12) en rotation autour dudit axe de rotation (11); et

v) un convertisseur photo-électrique (18) destiné à recevoir la lumière émise par ladite feuille de substance luminescente excitable (14) exposée audit rayonnement d'excitation et à convertir photo-électriquement la lumière émise en un signal électrique,

caractérisé en ce qu'un aimant (13) est monté à l'intérieur dudit tambour (12) le long d'une partie de la surface périphérique du tambour (12), en ce qu'une couche de matière magnétique (14a) est disposée sur l'autre face de ladite feuille de substance luminescente (14), et en ce que, pendant le balayage, la feuille de substance luminescente (14) est maintenue en contact intime avec une partie de la surface dudit tambour (12) par l'effet de l'attraction magnétique réciproque dudit aimant (13) et de ladite couche de matière magnétique (14a) de ladite feuille de substance luminescente excitable.

5. Un appareil selon la revendication 4, dans lequel ledit convertisseur photo-électrique comporte une feuille de guidage de lumière (18a) du type à réflexion totale qui présente, à une extrémité, une face d'entrée de lumière s'étendant selon la direction de balayage principal à proximité de la surface de ladite feuille de substance luminescent excitable (14) et, à l'autre extrémité, une face de sortie de lumière adjacente à une face réceptrice de lumière dudit convertisseur photoélectrique (18).

# F I G. I

# F I G. 2

1